# EUROPEAN PATENT SPECIFICATION

(11) **EP 3 139 376 B1**
(45) Date of publication and mention of the grant of the patent: **29.06.2022**
(21) Application number: 14890694.4
(22) Date of filing: 25.11.2014
(51) Int. Cl.: G10L 15/22, G10L 15/30

(54) **VOICE RECOGNITION METHOD AND DEVICE**
SPRACHERKENNUNGSVERFAHREN UND VORRICHTUNG
PROCÉDÉ ET DISPOSITIF DE RECONNAISSANCE VOCALE

(30) Priority: 30.04.2014 CN 201410182842
(43) Date of publication of application: 08.03.2017
(73) Proprietor: ZTE Corporation, Shenzhen, Guangdong 518057 (CN)
(72) Inventor: LIU, Haijun, Shenzhen Guangdong 518057 (CN); MIAO, Chuanyang, Shenzhen Guangdong 518057 (CN)
(74) Representative: Wallinger Ricker Schlotter Tostmann
(86) International application number: PCT/CN2014/092162
(87) International publication number: WO 2015/165257

(56) References cited:
- EP-A1- 1 333 426
- WO-A1-2013/179985
- CN-A- 1 324 175
- CN-A- 1 356 688
- CN-A- 1 501 233
- CN-A- 103 714 816
- US-A1- 2003 182 132
- US-A1- 2009 132 256
- US-A1- 2014 095 176
- US-B1- 7 197 455

## Description

### TECHNICAL FIELD

The disclosure relates to voice recognition techniques in the field of communication and information, and in particular to a voice recognition method, device and system and a computer storage medium.

### BACKGROUND

With the development of digital multimedia and networks, entertainment experiences of users in daily life are enriched. A current techniques enable a user at home to enjoy high-definition television TV programs, a source of a television program may be a digital video disc, a wired television, the Internet and the like, the user may experience stereophonic sounds, a 5.1 channel, a 7.1 channel and even more vivid sound effect, the user may also implement these experiences by virtue of a pad and a mobile phone, and related technologies further include technologies capable of enabling the user to transfer a digital content between different equipment through a network so as to play the transferred digital content, and to control playing on a piece of equipment through a remote control or a voice, e.g. the user is able to control to switch to a program of a previous channel or a next channel and so on.

In the related art, for controlling multiple pieces of equipment, generally each equipment has a respective remote controller to perform control, but these remote controllers are not universal, and most of these controllers for equipment such as a traditional TV set or sound box, cannot be networked. There may be some network enabled remote controls, e.g., a device (e.g., a mobile phone, a pad) having computing and networking capabilities can be loaded with software supporting intercommunication protocols to control another piece of equipment.

Along with development of techniques, there are increasing requirements on sharing and transferring of a played content among multiple pieces of equipment, and such a control manner seems not so convenient. For example, a user is required to select a remote controller corresponding to equipment from a heap of remote controllers and change remote controllers from time to time for controlling different equipment, or, a person familiar with basic computer operation operates a pad and a mobile phone to control the equipment, or particular equipment is controlled through a simple voice. It is usually necessary to learn how to use different control tools for using different equipment.

Voice control is a relatively novel manner at present, and a voice is acquired by a microphone on equipment, analytically recognized and finally converted into a corresponding executable instruction to control the equipment.

Related techniques and some products may enable users to control equipment with voices. For example, a microphone is added on a television to acquire a (human) voice, the voice is recognized, a corresponding operation instruction is executed to achieve a voice control effect on the television according to predefined correspondences between voices and operation instructions. Achieved manipulations include turning on, turning off and the like.

Such voice recognition techniques and products require controlled equipment to have microphones to acquire voices. However, in some environments such as a home environment, some equipment does not have microphones due to equipment sizes, cost and the like and users are also required to control the equipment without the microphones through voices.

To sum up, there is no effective solution in the related art yet for helping a user to control more equipment within a smaller range in a simpler and more natural operating manner so that the user does not need to learn and master more usage methods, and production cost of an enterprise and consumption cost of the user can be lowered.

US2003182132A1 discloses a voice-controlled arrangement comprising a plurality of devices to be controlled and a mobile voice data entry unit which is connected to said devices by a wireless communication link. At least some of the devices each have a device vocabulary memory and a vocabulary transmission unit, and the voice data entry unit has selection means for selecting the vocabularies to be loaded according to the route destination.

### SUMMARY

The embodiment of the disclosure provides a voice recognition method, device and system and a computer storage medium, which may implement voice control over equipment without a voice acquisition capability, facilitate use of a user over voice control equipment and improve user experiences.

The embodiment of the disclosure provides a voice recognition method applied in a voice recognition device according to claim 1.

The embodiment of the disclosure further provides a voice recognition method applied in a voice recognition control device according to claim 3.

The embodiment of the disclosure further provides a voice recognition device according to claim 5.

The embodiment of the disclosure further provides a voice recognition control device according to claim 8.

According to the technical solutions provided by the embodiment of the disclosure, by publishing the list of the voices supported by the voice recognition device and/or the list of the instructions corresponding to the supported voice commands, voice control over equipment with the voice recognition device but without a voice acquisition capability may be implemented, so that a user may be helped to control equipment within a certain range in a simpler and more natural operating manner, the user may rapidly and conveniently control equipment without learning and mastering multiple equipment control and usage methods, and in addition, production cost of an enterprise and consumption cost of the user are reduced.

### BRIEF DESCRIPTION OF THE DRAWINGS

Fig. 1 is a first diagram of a voice recognition method according to an embodiment of the disclosure;
Fig. 2 is a second diagram of a voice recognition method according to an embodiment of the disclosure;
Fig. 3 is a structure diagram of a voice recognition device according to an embodiment of the disclosure;
Fig. 4 is a structure diagram of a voice recognition device according to an embodiment of the disclosure;
Fig. 5a is a diagram of a scenario according to an embodiment of the disclosure;
Fig. 5b is a working flowchart of a voice recognition device and a voice recognition control device according to an embodiment of the disclosure; and
Fig. 6 is a diagram of message interaction during implementation of voice control according to an embodiment of the disclosure.

### DETAILED DESCRIPTION

The inventor finds that there has been a related technology for transmitting control information between different equipment to implement mutual discovery and control between the equipment through a network in a process of implementing the disclosure, and for example, a related Universal Plug and Play (UPnP) technology specifies how to send and receive a network message between equipment to implement discovery and control, the technology takes network addresses and digital codes as identifiers, which are machine identifiers, of the equipment, and a user is required to operate to finally implement control after selection according to the machine identifier of the equipment; and if a voice recognition method may be provided to help the user to control more equipment within a certain range in a simpler and more natural operating manner, the user is not required to learn and master more usage methods, and production cost of an enterprise and consumption cost of the user may also be reduced.

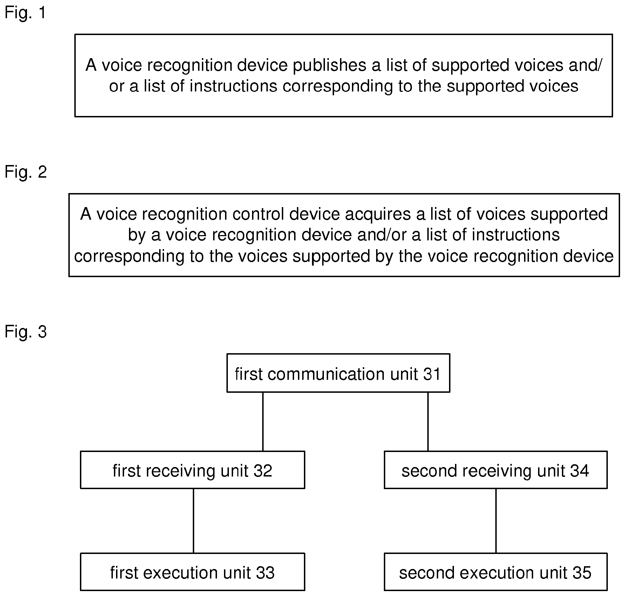

The embodiment of the disclosure records a voice recognition method, and as shown in Fig. 1, a voice recognition device (for example, in a network) publishes a list of supported voices and/or a list of instructions corresponding to the supported voices.

It is important to point out that the voice recognition device is arranged in equipment to be controlled, and the equipment to be controlled may be any conventional equipment, and is not required to have a voice acquisition capability and a voice recognition capability; each of the two lists includes an identifier of the equipment to be controlled where the voice recognition device is located and instructions supported by the voice recognition device, and since voice recognition devices and equipment to be controlled form a one-to-one corresponding relationship and the instructions supported by the voice recognition device are configured to control the equipment to be controlled, the identifier of the equipment to be controlled may be equivalent to (considered as) an identifier of the voice recognition device, and the instructions supported by the voice recognition device may also be equivalent to instructions supported by the equipment to be controlled; an example of the list of the voices supported by the voice recognition device is as follows:
local equipment (corresponding to the equipment to be controlled) identifier=television in a living room; turning off.wav; tuning on.wav; volume up.wav; volume down.wav;
an example of the list of the instructions corresponding to the voices supported by the voice recognition device is as follows:
   local equipment (corresponding to the equipment to be controlled) identifier=television in the living room; instruction 1=turning off; instruction 2=turning on; 3=volume up; 4=volume down;
   another example of the list of the instructions corresponding to the voices supported by the voice recognition device is as follows:
      local equipment identifier=television in the living room.wav; instruction 1=turning off.wav; instruction 2=turning on.wav; 3=volume up.wav; 4=volume down.wav;
      wherein a "wav" filename is a coded voice data file, and coded digital data of voices such as turning off" is stored in the voice data file.

As mentioned above, the voice recognition device may publish a list corresponding to the form of any example, and may also publish a list corresponding to forms including the forms of the two examples.

For different equipment to be controlled, the same list may be preset, different lists may also be preset, and equipment identifiers (local equipment identifiers) in the lists are unique to distinguish different equipment to be controlled.

As an implementation mode, the voice recognition device also receives an acquired voice and executes an instruction corresponding to the acquired voice, or,
forwards the acquired voice or the instruction corresponding to the acquired voice, wherein the voice recognition device is also required to recognize the acquired voice to obtain the instruction corresponding to the acquired voice before executing the instruction corresponding to the acquired voice.

Herein, the voice recognition device executes the instruction to implement control, such as starting and stopping, over the equipment to be controlled where the voice recognition is located; and when forwarding the acquired voice, the voice recognition device may forward all acquired voices (or instructions corresponding to the voices).

As an implementation mode, the step that the voice recognition device forwards the acquired voice or the instruction corresponding to the acquired voice includes that: the voice recognition device forwards the acquired voice or the instruction corresponding to the acquired voice according to a preset strategy;
here, forwarding may be implemented in a manner of sending a message in a network, or may be implemented through a communication interface between voice recognition devices; the message sent in the network includes multicast, broadcast and unitcast messages; the preset strategy includes at least one of the following strategies that: when the acquired voice which is received is a preset specific voice, the acquired voice or the instruction corresponding to the acquired voice is forwarded; if the acquired voice is not supported, the acquired voice or the instruction corresponding to the acquired voice is forwarded, that is, if the voice recognition device cannot recognize the received voice, or the voice recognition device can recognize an instruction corresponding to the received voice but cannot support the recognized instruction, it is indicated that a target voice recognition device of the received voice is not the voice recognition device, and correspondingly, the voice recognition device forwards the acquired voice or the instruction corresponding to the acquired voice to another voice recognition device so that a target recognition device which receives the voice or the instruction can process accordingly; and for example, when voice "turning on" and voice "turning off" are received, the voice recognition device publishes voice "turning off" or instruction "turning off" in the network for another voice recognition device to process if only supporting a turning-on instruction corresponding to "turning on".

Voice acquisition may be implemented by the voice recognition control device for the voice recognition device to receive the voice acquired by the voice recognition control device. The voice mentioned here is represented by a computer coded data, such as sampling frequency data including a sound, and a coding format may adopt a standard such as G.711 formulated by the International Telecommunication Union Telecommunication Standardization Sector (ITU-T). Upon reception of the voice, the voice recognition device recognize the instruction corresponding to the received voice, and triggers the equipment to be controlled where the voice recognition device is located to execute the recognized instruction to implement control over the equipment to be controlled where the voice recognition device is located.

As an implementation mode, the step that the voice recognition device publishes the list of the supported voices and/or the list of the instructions corresponding to the supported voices includes that:
the voice recognition device publishes (for example, publishes in the network) the list of the supported voices and/or the list of the instructions corresponding to the supported voices, that is, the voice recognition device independently publishes the lists/list;
or, the voice recognition device responds with the list of the supported voices and/or the list of the instructions corresponding to the supported voices after receiving a request message for querying the voice recognition capability, that is, the voice recognition device passively responds to send the lists/list in the network; and for example, a response may be given in the network in a unicast, multicast or broadcast message form,
herein the voice recognition device may periodically and non-periodically publish the list of the supported voices and/or the list of the instructions corresponding to the supported voices; and the list of the voices includes at least one of the following information: a voice text; coded voice data; a voice text of the equipment identifier and/or coded voice data of the equipment identifier.

Since there may be multiple pieces of equipment to be controlled in some application scenarios, voice recognition devices are correspondingly arranged in each piece of equipment to be controlled and each voice recognition device may support different voices, the voice recognition devices may recognize acquired voices, that is, one or more voice recognition devices supporting own acquired voices are determined, and instructions corresponding to the voices are correspondingly sent to target voice recognition devices. Correspondingly, as an implementation mode, the method further includes that: the voice recognition device receives the instruction corresponding to the acquired voice, and executes the instruction; and
in the implementation mode, the instruction, received by the voice recognition device, corresponding to the acquired voice is an instruction supported by the voice recognition device, so that the received instruction may be directly executed.

The voice recognition device may be arranged in the equipment to be controlled, and performs voice recognition by virtue of own voice recognition capability.

As an implementation mode, since there may be multiple pieces of equipment to be controlled in some application scenarios and voice recognition devices are correspondingly arranged in each piece of equipment to be controlled, it is necessary to distinguish the voice recognition devices in different equipment to be controlled; correspondingly, the list of the supported voices and/or the list of the instructions corresponding to the supported voices, which are/is published by the voice recognition device in the network, further includes the identifier of the voice recognition device; and the identifier includes at least one of identifiers in the following forms:
a voice text corresponding to the identifier of the voice recognition device; and
coded voice data corresponding to the identifier of the voice recognition device.

The embodiment of the disclosure further records a voice recognition method, and as shown in Fig. 2, the method includes that:
a voice recognition control device acquires a list of voices supported by a voice recognition device and/or a list of instructions corresponding to the voices supported by the voice recognition device.

As an implementation mode, the voice recognition control device further (through a microphone) acquires a voice and sends the acquired voice to the voice recognition device, so that equipment to be controlled without a voice acquisition capability is equivalently endowed with the voice acquisition capability by receive the voice acquired by the voice recognition control device,
herein the voice includes at least one of voices in the following forms: a voice text; and coded voice data.

As an implementation mode, the step that the voice recognition control device acquires the voice and sends the acquired voice to the voice recognition device means that the voice recognition control device sends all acquired voices to all voice recognition devices for the voice recognition devices to recognize; and of course, the voice recognition control device may also recognize the acquired voice, recognize an instruction corresponding to the acquired voice and sends the recognized instruction to all the voice recognition devices.

As an implementation mode, since there may be multiple pieces of equipment to be controlled in some application scenarios and voice recognition devices are correspondingly arranged in each piece of equipment to be controlled, when acquiring the voice, the voice recognition control device may recognize the voice, recognize the instruction corresponding to the voice and a target voice recognition device of the voice (because the voice recognition devices correspond to equipment to be controlled one to one, recognizing the target voice recognition device of the voice may also be equivalent to recognizing target equipment to be controlled by the voice) and send the acquired voice (or the instruction corresponding to the voice) to the target voice recognition device,
herein each of the list of the voices supported by the voice recognition device and the list of the instructions corresponding to the voices supported by the voice recognition device includes an identifier of the voice recognition device;
correspondingly, when the voice recognition control device determines the target voice recognition device to be controlled which is instructed by the acquired voice, the following implementation manner may be adopted: the voice recognition control device recognizes the acquired voice, matches a recognition result and identifiers of voice recognition devices, and determines the matched voice recognition device as the target voice recognition device to be controlled which is instructed by the acquired voice.

Herein, the identifier of the voice recognition device includes at least one of identifiers in the following forms:
a voice text corresponding to the voice recognition device (or equipment to be controlled where the voice recognition device); and
coded voice data corresponding to the voice recognition device (or the equipment to be controlled where the voice recognition device is located). For example, when the coded voice data is "television in a living room.wav", it is indicated that the target voice recognition device of the voice is a voice recognition device in the television in the living room.

As an implementation mode, the step that the voice recognition control device acquires (for example, acquires through a network) the list of the voices supported by the voice recognition device and/or the list of the instructions corresponding to the supported voices includes that:
the voice recognition control device receives (for example, receives through the network) the list of the supported voices and/or the list of the instructions corresponding to the supported voices, which are/is published by the voice recognition device, that is, the voice recognition control device receives the lists/list actively published by the voice recognition device; or,
the voice recognition control device sends (for example, sends through the network) a voice recognition capability request message to the voice recognition device to receive the list of the supported voices and/or the list of the instructions corresponding to the supported voices, which are responded by the voice recognition device.

The embodiment of the disclosure further records a computer storage medium, in which an executable instruction is stored, the executable instruction being configured to execute the voice recognition method shown in Fig. 1 or Fig. 2.

The embodiment of the disclosure further records a voice recognition device, and as shown in Fig. 3, the voice recognition device includes:
a first communication unit 31 configured to publish (for example, publish in a network) a list of supported voices and/or a list of instructions corresponding to the supported voices.

Herein, the voice recognition device further includes:
a first receiving unit 32 configured to receive an acquired voice; and
a first execution unit 33 configured to execute an instruction corresponding to the acquired voice, or,
forward the acquired voice or the instruction corresponding to the acquired voice.

Herein, the first execution unit 33 is further configured to recognize the acquired voice to obtain the instruction corresponding to the acquired voice, and when determining that the acquired voice is supported, determine the instruction corresponding to the acquired voice and execute the determined instruction.

Herein, the first execution unit 33 is further configured to forward the acquired voice or the instruction corresponding to the acquired voice according to a preset strategy; and the preset strategy includes at least one of the following strategies that:
when the acquired voice is a preset specific voice, the acquired voice or the instruction corresponding to the acquired voice is forwarded; and
when the acquired voice is not supported, the acquired voice or the instruction corresponding to the acquired voice is forwarded.

Herein, the first communication unit 31 is further configured to actively publish (for example, publish in the network) the list of the supported voices and/or the list of the instructions corresponding to the supported voices; or
upon reception of a request message for querying a voice recognition capability, respond (for example, respond in the network) with the list of the supported voices and/or the list of the instructions corresponding to the supported voices.

Herein, the voice recognition device further includes:
a second receiving unit 34 configured to receive the instruction corresponding to the acquired voice; and
a second execution unit 35 configured to execute the instruction received by the second receiving unit 34.

Herein, the voices in the list of the voices include at least one of voices in the following forms:
a voice text; and coded voice data.

Herein, the list of the supported voices and/or the list of the instructions corresponding to the supported voices, which are/is published by the voice recognition device in the network, further include/includes an identifier of the voice recognition device; and the identifier includes at least one of identifiers in the following forms:
a voice text corresponding to the identifier of the voice recognition device; and
coded voice data corresponding to the identifier of the voice recognition device.

During a practical application, the first communication unit 31, the first receiving unit 32 and the second receiving unit 34 may be implemented by a chip supporting a corresponding communication protocol in the voice recognition device, and the communication protocol includes: Institute of Electrical and Electronic Engineers (IEEE) 802.11b/g/n and IEEE 802.3; and the first execution unit 33 and the second execution unit 35 may be implemented by a Central Processing Unit (CPU), Digital Signal Processor (DSP) or Field Programmable Gate Array (FPGA) in the voice recognition device.

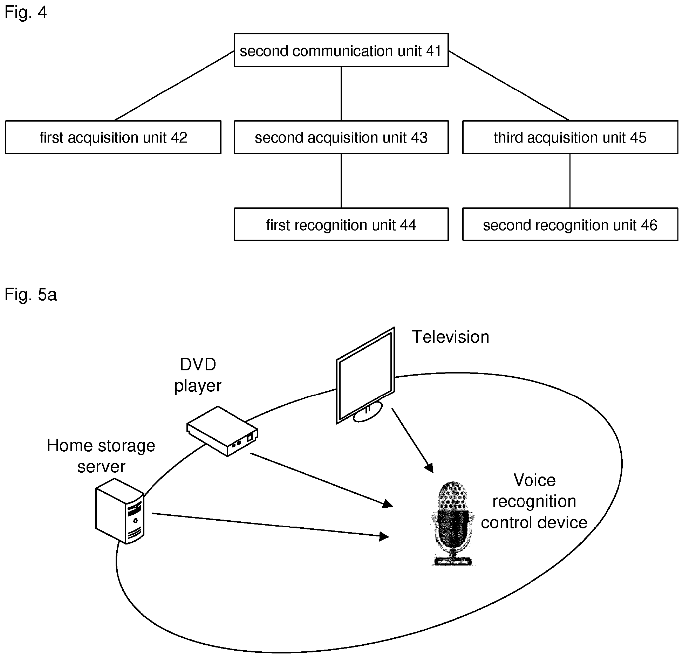

The embodiment of the disclosure further records a voice recognition control device, and as shown in Fig. 4, the voice recognition control device includes:
a second communication unit 41 configured to acquire (for example, acquire through a network) a list of voices supported by a voice recognition device and/or a list of instructions corresponding to the voices supported by the voice recognition device.

Herein, the voice recognition control device further includes:
a first acquisition unit 42 configured to acquire a voice and send the acquired voice to the voice recognition device through the second communication unit 41.

Herein, the voice includes at least one of voices in the following forms: a voice text; and coded voice data.

Herein, the voice recognition control device further includes:
a second acquisition unit 43 configured to acquire a voice; and
a first recognition unit 44 configured to recognize an instruction corresponding to the voice acquired by the second acquisition unit 43 and send the recognized instruction to the voice recognition device through the second communication unit 41.

A third acquisition unit 45 is configured to acquire a voice; and
a second recognition unit 46 is configured to recognize a target voice recognition device to be controlled which is instructed by the voice acquired by the third acquisition unit 45, and trigger the second communication unit 41 to send the voice acquired by the third acquisition unit 45 or an instruction corresponding to the voice acquired by the third acquisition unit 45 to the target voice recognition device.

Herein, each of the list of the voices supported by the voice recognition device and the list of the instructions corresponding to the voices supported by the voice recognition device includes an identifier of the voice recognition device; and
correspondingly, the second recognition unit 46 is further configured to recognize the voice acquired by the third acquisition unit 45, match a recognition result and identifiers of voice recognition devices, and
determine the matched voice recognition device as the target voice recognition device to be controlled which is instructed by the voice acquired by the third acquisition unit 45.

Herein, the identifier of the voice recognition device includes at least one of identifiers in the following forms:
a voice text corresponding to the voice recognition device; and
coded voice data corresponding to the voice recognition device.

Herein, the second communication unit 41 is further configured to receive (for example, receive through the network) the list of the supported voices and/or the list of the instructions corresponding to the supported voices, which are/is published by the voice recognition device; or,
send (for example, send through the network) a voice recognition capability request message to the voice recognition device to receive the list of the supported voices and/or the list of the instructions corresponding to the supported voices, which are/is responded by the voice recognition device.

During a practical application, the second communication unit 41 may be implemented by a chip supporting a corresponding communication protocol in the voice recognition control device, and the communication protocol includes: IEEE 802.11b/g/n and IEEE 802.3; the first acquisition unit 42, the second acquisition unit 43 and the third acquisition unit 45 may be implemented by a microphone, with a voice acquisition function, of the voice recognition control device; and the first recognition unit 44 and the second recognition unit 46 may be implemented by a CPU, DSP or FPGA in the voice recognition control device.

The embodiment of the disclosure further records a voice recognition system, which includes a voice recognition device and/or a voice recognition control device,
herein the voice recognition device is configured to publish a list of supported voices and/or a list of instructions corresponding to the supported voices; and
the voice recognition control device is configured to acquire the list of the voices supported by the voice recognition device and/or the list of the instructions corresponding to the voices supported by the voice recognition device.

Herein, the voice recognition device is further configured to receive an acquired voice;
execute an instruction corresponding to the acquired voice; or,
forward the acquired voice or the instruction corresponding to the acquired voice.

Herein, the voice recognition device is further configured to recognize the acquired voice to obtain the instruction corresponding to the acquired voice.

Herein, the voice recognition device is further configured to forward the acquired voice or the instruction corresponding to the acquired voice according to a preset strategy; and the preset strategy includes at least one of the following strategies that:
when the acquired voice is a preset specific voice, the acquired voice or the instruction corresponding to the acquired voice is forwarded; and
when the acquired voice is not supported, the acquired voice or the instruction corresponding to the acquired voice is forwarded.

Herein, the voice recognition device is further configured to actively publish the list of the supported voices and/or the list of the instructions corresponding to the supported voices; or
upon reception of a request message for querying a voice recognition capability, the voice recognition device responds with the list of the supported voices and/or the list of the instructions corresponding to the supported voices.

Herein, the voice recognition device is further configured to receive the instruction corresponding to the acquired voice and execute the instruction.

The voices in the list of the voices include at least one of voices in the following forms:
a voice text; and coded voice data.

Herein, the list of the supported voices and/or the list of the instructions corresponding to the supported voices, which are/is published by the voice recognition device further include/includes an identifier of the voice recognition device; and the identifier includes at least one of identifiers in the following forms:
a voice text corresponding to the identifier of the voice recognition device; and
coded voice data corresponding to the identifier of the voice recognition device.

Herein, the voice recognition control device is further configured to acquire the voice and send the acquired voice to the voice recognition device.

Herein, the voice recognition control device is further configured to acquire the voice, recognize the instruction corresponding to the acquired voice and send the recognized instruction to the voice recognition device.

The voice includes at least one of voices in the following forms: a voice text; and coded voice data.

Herein, the voice recognition control device is further configured to acquire a voice;
determine a target voice recognition device to be controlled which is instructed by the acquired voice; and
send the acquired voice or an instruction corresponding to the acquired voice to the target voice recognition device.

Each of the list of the voices supported by the voice recognition device and the list of the instructions corresponding to the voices supported by the voice recognition device includes the identifier of the voice recognition device.

Herein, the voice recognition control device is further configured to recognize the acquired voice, match a recognition result and identifiers of voice recognition devices, and
determine the matched voice recognition device as the target voice recognition device to be controlled which is instructed by the acquired voice.

The identifier of the voice recognition device includes at least one of identifiers in the following forms:
a voice text corresponding to the voice recognition device; and
coded voice data corresponding to the voice recognition device.

Herein, the voice recognition control device is further configured to receive the list of the supported voices and/or the list of the instructions corresponding to the supported voices, which are/is published by the voice recognition device; or,
the voice recognition control device sends a voice recognition capability request message to the voice recognition device to receive the list of the supported voices and/or the list of the instructions corresponding to the supported voices, which are/is responded by the voice recognition device.

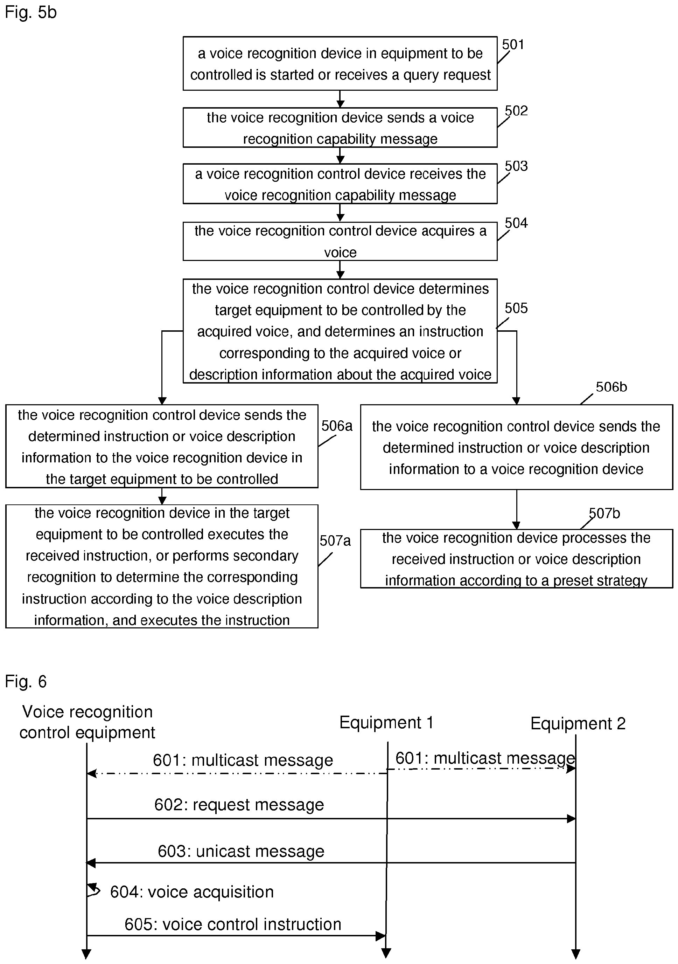

The method recorded by the embodiment of the disclosure will be described below with reference to specific application scenarios, Fig. 5a is a diagram of a scenario according to an embodiment of the disclosure, and four pieces of equipment shown in Fig. 5 are a voice recognition control device, a television, a Digital Video Disk (DVD) player and a home storage server respectively, herein the television and the home storage server support voice control, but do not have microphones to support voice control, and in order to facilitate description, the DVD player does not support voice control, and may be controlled by a conventional remote controller only.

The four pieces of equipment all have network interfaces, for example, supporting IEEE 802.11b/g/n or supporting IEEE 802.3, so as to be connected to an Internet Protocol (IP) network, and any one of the four pieces of equipment may communicate with the other equipment, and process instructions or forward the instructions.

Capabilities of the four pieces of equipment in mutual discovery, connection and message sending and receiving on a network may be implemented by virtue of a related UPnP technology, and may also be implemented by virtue of a Multicast Domain Name System (mDNS) or Domain Name System-based Service Discovery (DNS-SD) technology, and such technologies are applied to IP networks, and respond to query and provide function calling according to predefined message formats in unicast and multicast query manners. For example, the UPnP technology specifies how to respond to query and called functions to be provided for media display equipment (such as the television) and a server (such as the DVD player and the home storage server).

The voice recognition control device performs voice acquisition to implement voice recognition through the microphone, and may also realize data storage, control and network service functions.

In the embodiment of the disclosure, the voice recognition control device may also be wearable equipment, such as ring type equipment worn on a hand and watch type equipment worn on an arm, and such wearable equipment may acquire, recognize or code a voice produced by a user, and also has a network function.

In the embodiment of the disclosure, the voice recognition control device may recognize an identifier of an equipment device according to received capability information of the voice control device and find information such as a network address and unique identifier of the equipment device, thereby determining a target voice recognition device and sending an acquired voice or an instruction corresponding to the acquired voice to the target voice recognition device.

In the embodiment of the disclosure, when equipment to be controlled such as the television and the home storage server is turned on, a voice recognition device in the equipment to be controlled sends a message in a multicast manner, and the message includes:
an identifier of the voice recognition device, which is configured to indicate that the device is a voice recognition device and may adopt a predefined coding type, such as a network address or an identifier different from the network address, such as a character string;
a list of instructions corresponding to voices supported by the voice recognition device, herein, for example, when the voices adopt a text form, an example of the list is as follows: "local equipment identifier=television in a living room; instruction 1=turning off; instruction 2=turning on; 3=volume up; 4=volume down";
when the voices adopt coded data, an example of the list is as follows: "local equipment identifier=television in the living room.wav; instruction 1=turning off.wav; instruction 2=turning on.wav; 3=volume up.wav; 4=volume down.wav"; and
the message may further include: instruction parameters corresponding to the voices supported by the voice recognition device, such as durations represented by the voices.

Processing of matching a voice recognition device and voice recognition control device in Fig. 5a to implement voice control over equipment will be described below, Fig. 5b is a working flowchart of a voice recognition device and a voice recognition control device according to an embodiment of the disclosure, and as shown in Fig. 5b, the flow includes the following steps.

Step 501: a voice recognition device in equipment to be controlled is started, or receives a query request.

The query request is sent by a voice recognition control device in Fig. 5b, and is configured to request for a voice recognition capability of the voice recognition device arranged in each piece of equipment (including the home storage server, the television and the DVD player) in Fig. 5a, and the voice recognition capability adopts a list of voices supported by the voice recognition device and/or a list of instructions corresponding to the supported voices.

Step 502: the voice recognition device sends a voice recognition capability message.

The voice recognition capability message includes an identifier (adopting a text form or a coded voice data form) of the voice recognition device and a set of voice description information, and the voice description information includes the list of the instructions corresponding to the voices supported by the voice recognition device and/or the list of the supported voices; a form adopted for the voices in the list of the voices includes: a voice text form and a coded voice data form; and since the voice recognition devices corresponding to the equipment to be controlled in Fig. 5a one to one, the identifier of the voice recognition device may also be an identifier of the equipment to be controlled.

The voice recognition device may actively send the voice recognition capability message in a broadcast or multicast message form, and may also send the voice recognition capability message in a unicast, multicast or broadcast message form upon reception of a query message for querying whether the equipment to be controlled supports voice recognition.

Step 503: the voice recognition control device receives the voice recognition capability message.

Step 504: the voice recognition control device acquires a voice.

Here, acquisition may be implemented in a computer acquisition manner, for example, voice data is captured through a microphone for analytical recognition of the voice, and the voice data may also be acquired through wearable equipment for analytical recognition of the voice.

Step 505: the voice recognition control device acquires the voice, determines an instruction corresponding to the acquired voice, or determines description information about the acquired voice, and sends the determined instruction or voice description information to the voice recognition device.

The voice recognition control device determines a target voice recognition device of the acquired voice after acquiring the voice, and since the voice recognition devices correspond to the equipment to be controlled one to one in Fig. 5b, determining the target voice recognition device is equivalent to determining target equipment to be controlled by the voice, that is, the equipment to be controlled by the acquired voice is determined, and determining the target voice recognition device may be implemented in a manner of matching the acquired voice and the identifiers of the recognition devices in the list; and
the description information about the acquired voice is in the text form or the coded voice data form.

Step 506a: the voice recognition control device sends the determined instruction or voice description information to the target voice recognition device.

That is, the determined instruction or voice description information is sent to the voice recognition device in the target equipment to be controlled by the voice.

Step 507a: upon reception of the instruction, the target voice recognition device executes the received instruction; and upon reception of the voice description information, the target voice recognition device performs secondary recognition to determine a corresponding instruction according to the voice description information, and executes the instruction.

Step 506a and Step 507a may be replaced with Step 506b and Step 507b.

Step 506b: the voice recognition control device sends the determined instruction or voice description information to a voice recognition device.

That is, the determined instruction or voice description information is sent to the voice recognition devices arranged in the equipment (including the home storage server, the television and the DVD player) in Fig. 5a.

Step 507b: the voice recognition device processes the received instruction or voice description information according to a preset strategy.

The preset strategy includes that: when the acquired voice is a preset specific voice (for example, the voice has been forwarded by the voice recognition device), the acquired voice is forwarded; and when the acquired voice is not supported, the acquired voice is forwarded.

The condition that the voice recognition device (set to be voice recognition device 1) arranged in the television receives an instruction (i.e. the instruction determined by the voice recognition control device in Step 505) for processing is taken as an example. When voice recognition device 1 receives the instruction, if voice recognition device 1 supports the received instruction, it is indicated that target equipment to be controlled by the voice of the user is the television, and correspondingly, voice recognition device 1 controls the television to execute the instruction to give a response to voice control of the user; and if voice recognition device 1 does not support the received instruction, it is indicated that the target equipment to be controlled by the voice of the user is not the television, the received instruction is forwarded to the voice recognition devices arranged in the other equipment (including the home storage server and the DVD player) in Fig. 5a, and the voice recognition devices in the other equipment determine whether the received instruction is supported or not respectively, and execute the instruction to give responses to voice control of the user when determining that the received instruction is supported.

When the voice recognition device (set to be voice recognition device 1) arranged in the television receives voice description information (i.e. the voice description information determined by the voice recognition control device in Step 505), voice recognition device 1 is required to determine a corresponding instruction according to the voice description information, and other processing is the same as that mentioned above, and will not be elaborated herein; and
when the voice recognition device (set to be voice recognition device 1) arranged in the television receives the instruction (i.e. the instruction determined by the voice recognition control device in Step 505), if the instruction is an instruction which has been forwarded by voice recognition device 1 before, it is indicated that the instruction is an instruction not supported by the voice recognition device, the instruction is forwarded to the voice recognition devices arranged in the other equipment (including the home storage server and the DVD player) in Fig. 5a, and the voice recognition devices in the other equipment determine whether the received instruction is supported or not respectively, and execute the instruction to give responses to voice control of the user when determining that the received instruction is supported.

The voice recognition device controls the equipment where it is located to respond to the received instruction, thereby implementing voice control over the equipment.

In the embodiment, multiple voice recognition devices of the user may also be prevented from mistakenly operating according to a voice produced by the user. For example, when voice recognition devices in multiple pieces of equipment support the same voice (corresponding to a turning-off instruction) and the user is intended to turn off one piece of equipment, target equipment to be controlled is determined by the abovementioned step to avoid a mistaken response to the voice of the user.

Fig. 6 is a diagram of message interaction during implementation of voice control according to an embodiment of the disclosure, the abovementioned voice recognition devices are arranged in equipment 1 and equipment 2 respectively, and the abovementioned voice recognition control device is arranged in voice recognition control equipment; and as shown in Fig. 6, voice control in the embodiment of the disclosure includes the following steps.

Step 601: equipment 1 sends a multicast message.

The multicast message includes a list of instructions corresponding to voices supported by the voice recognition device in equipment 1.

Therefore, the voice recognition control equipment in a network receives the list of the instructions corresponding to the voices supported by equipment 1.

Step 602: the voice recognition control equipment sends a request message for querying a voice recognition capability to equipment 2.

The message sent in Step 602 may be sent in a broadcast, multicast or unicast message form.

Step 603: equipment 2 sends a unicast message.

The unitcast message includes a list of instructions corresponding to voices supported by equipment 2.

Step 604: the voice recognition control equipment acquires a voice.

Step 605: the voice recognition control equipment sends a voice control instruction to equipment 1.

Such an instruction is sent because the voice recognition control equipment determines the voice, acquired in Step 604, of a user is to control equipment 1 and determines that equipment 1 supports the acquired voice.

Therefore, equipment 1 which does not have a part such as a microphone and wearable equipment supports voice control.

Herein, equipment 1 and equipment 2 may be equipment to be controlled such as a television, a player and a storage server, the equipment to be controlled in the embodiment of the disclosure is not limited to the abovementioned equipment, other equipment such as a computer, a sound, a sound box, a projector and a set-top box may also be taken as equipment to be controlled, and even other industrial equipment such as an automobile, a machine tool and a ship may also be controlled by the voice recognition control device recorded by the embodiment of the disclosure.

In the embodiment, the microphone in the voice recognition control device may adopt various specifications, such as a single-channel acquisition microphone and a microphone array.

The abovementioned flow is an embodiment for implementing the disclosure, the disclosure is not limited to be implemented by the embodiment only, a specific method for executing the flow is also not limited in the embodiment, the embodiment of the disclosure may also be implemented in similar manners, for example, the devices are replaced with units and names, types and the like of various messages recorded in the embodiment of the disclosure are modified, and such manners only involve variations of naming forms, and still belong to the scope of protection of the disclosure as defined by the appended claims.

For clarity, not all common characteristics of the equipment are shown and described in the embodiment of the disclosure. Of course, it should be understood that it is necessary to determine specific implementation manners to fulfil specific aims of researchers in researches on any practical equipment, such as consistency with constraints related to applications and services, and these specific aims change along with different implementation manners, and change along with different researchers. Moreover, it should be understood that such researches are complicated and time-consuming, but technical work carried out by those inspired by the contents disclosed in the disclosure is routine.

According to the subject described here, various parts, systems, devices, processing steps and/or data structures may be manufactured, operated and/or executed by virtue of various kinds of operating systems, computing platforms, computer programs and/or universal machines. In addition, those skilled in the art will know that devices which are not so universal may also be utilized without departing from the scope of the invention as defined by the appended claims.

Herein, the included method is executed by a computer, a device or a machine, and the method may be stored as a machine-readable instruction, which may be stored on a determined medium such as a computer storage device, including, but not limited to, a Read-Only Memory (ROM) (such as a ROM, a FLASH memory and a transfer device), a magnetic storage medium (such as a magnetic tape and a magnetic disk driver), an optical storage medium (such as a Compact Disc-ROM (CD-ROM), a DVD-ROM, a paper card and a paper tape) and program memories of other well-known types. In addition, it should be realized that the method may be executed by a human operator by virtue of selection of a software tool without human or creative judgment.

The embodiment is network-related and may be applied to an IP network supported by a communication network such as an IEEE 802.3-based network, an IEEE 802.11b/g/n-based network, a power line network, a cable network, a Public Switched Telephone Network (PSTN), a 3rd Generation Partnership Project (3GPP) network and a 3GPP2 network, an operating system of each device may include a UNIX operating system, a WINDOWS operating system, an ANDROID operating system and an IOS, and an interface for a consumer may include a JAVA language interface and the like.

In the embodiments provided by the disclosure, it should be understood that the disclosed equipment and method may be implemented in other forms. The equipment embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection implemented through some interfaces, equipment or units, and may also be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve a purpose of the solutions of the embodiment according to a practical requirement.

In addition, each function unit in each embodiment of the disclosure may be integrated into a processing unit, each unit may also exist independently, and two or more than two units may also be integrated into a unit. The integrated unit may be implemented in a hardware form, and may also be implemented in form of combining hardware and a software function unit.

Those skilled in the art should know that: all or part of the steps of the method embodiment may be implemented by related hardware instructed through a program, the program may be stored in a computer-readable storage medium, and the program is executed to execute the steps of the method embodiment; and the storage medium includes: various media capable of storing program codes, such as mobile storage equipment, a Random Access Memory (RAM), a ROM, a magnetic disk or a compact disc.

Or, when being implemented in form of software function unit and sold or used as an independent product, the integrated unit of the disclosure may be stored in a computer-readable storage medium. Based on such an understanding, the technical solutions of the embodiment of the disclosure substantially or parts making contributions to the related technology may be embodied in form of software product, and the computer software product is stored in a storage medium, including a plurality of instructions configured to enable a piece of computer equipment (which may be a personal computer, a server, network equipment or the like) to execute all or part of the method of each embodiment of the disclosure. The storage medium includes: various media capable of storing program codes such as mobile storage equipment, a RAM, a ROM, a magnetic disk or a compact disc.

The above is only the specific implementation mode of the disclosure and not intended to limit the scope of protection of the disclosure, and any variations or replacements apparent to those skilled in the art within the technical scope of the disclosure shall fall within the scope of protection as defined by the appended

## Claims

1. A voice recognition method applied in a voice recognition device, the voice recognition device is connected to other voice recognition devices and a voice recognition control device through a network, wherein the voice recognition device is arranged in equipment to be controlled, the method comprising:
publishing, by the voice recognition device, a list of supported voice commands and/or a list of instructions corresponding to the supported voice commands, in the network;
(503) receiving, by the voice recognition device, an acquired voice command; and
(507a) when the acquired voice command is supported, executing, by the voice recognition device an instruction corresponding to the acquired voice command;
(506b) when the acquired voice command is not supported, forwarding, by the voice recognition device, the acquired voice command or the instruction corresponding to the acquired voice command, to another voice recognition device through the network.

2. The voice recognition method according to claim 1, wherein voices in the list of supported voice commands comprise at least one of voices in the following forms:
a voice text; and coded voice data;
and wherein the list of the supported voice commands and/or the list of the instructions corresponding to the supported voice commands, which are/is published by the voice recognition device, further comprise/comprises an identifier of the voice recognition device; and the identifier comprises at least one of identifiers in the following forms:
a voice text corresponding to the identifier of the voice recognition device; and
coded voice data corresponding to the identifier of the voice recognition device.

3. A voice recognition method applied in a voice recognition control device, the voice recognition control device being connected to at least one voice recognition device through a network, wherein the voice recognition device is arranged in equipment to be controlled, the method comprising:
acquiring, by a voice recognition control device, a list of voice commands supported by a voice recognition device and/or a list of instructions corresponding to the voice commands supported by the voice recognition device through the network, wherein each of the list of the voice commands supported by the voice recognition device and the list of the instructions corresponding to the voice commands supported by the voice recognition device comprises an identifier of the voice recognition device;
(504) acquiring, by the voice recognition control device, a voice;
recognizing, by the voice recognition control device, the acquired voice command, and matching, by the voice recognition control device, a recognition result and identifiers of voice recognition devices;
(505) determining, by the voice recognition control device, the matched voice recognition device as a target voice recognition device to be controlled which is instructed by the acquired voice command; and
(506a) sending, by the voice recognition control device, the acquired voice command or an instruction corresponding to the acquired voice command to the target voice recognition device.

4. The voice recognition method according to claim 3, wherein acquiring, by the voice recognition control device, the list of the voice commands supported by the voice recognition device and/or the list of the instructions corresponding to the supported voice commands comprises:
receiving, by the voice recognition control device, the list of the supported voice commands and/or the list of the instructions corresponding to the supported voice commands, which are/is published by the voice recognition device; or,
sending, by the voice recognition control device, a voice recognition capability request message to the voice recognition device to receive the list of the supported voice commands and/or the list of the instructions corresponding to the supported voice commands, which are/is responded by the voice recognition device.

5. A voice recognition device which is connected to other voice recognition devices and a voice recognition control device through a network, wherein the voice recognition device is arranged in equipment to be controlled, the voice recognition device comprising:
a first communication unit (31) configured to publish a list of supported voice commands and/or a list of instructions corresponding to the supported voice commands in the network;
a first receiving unit (32) configured to receive an acquired voice command; and
a first execution unit (33) configured to: execute an instruction corresponding to the acquired voice command; or,
when the acquired voice command is not supported, forward the acquired voice command or the instruction corresponding to the acquired voice command to another voice recognition device through the network.

6. The voice recognition device according to claim 5, wherein
the first communication unit (31) is further configured to: actively publish the list of the supported voice commands and/or the list of the instructions corresponding to the supported voice commands in a network; or
upon reception of a request message for querying a voice recognition capability, respond with the list of the supported voice commands and/or the list of the instructions corresponding to the supported voice commands.

7. The voice recognition device according to claim 5, further comprising:
a second receiving unit (34) configured to receive the instruction corresponding to the acquired voice; and
a second execution unit (35) configured to execute the instruction received by the second receiving unit.

8. A voice recognition control device which is connected to at least one voice recognition device through a network, wherein the voice recognition device is arranged in equipment to be controlled, the device comprising:
a second communication unit configured to acquire a list of voice commands supported by a voice recognition device and/or a list of instructions corresponding to the voice commands supported by the voice recognition device through the network, wherein each of the list of the voice commands supported by the voice recognition device and the list of the instructions corresponding to the voice commands supported by the voice recognition device comprises an identifier of the voice recognition device;
a third acquisition unit configured to acquire a voice;
a second recognition unit configured to recognize the acquired voice command, match a recognition result and identifiers of voice recognition devices, determine the matched voice recognition device as the target voice recognition device to be controlled which is instructed by the acquired voice command; and trigger the second communication unit to send the voice acquired by the third acquisition unit or an instruction corresponding to the voice acquired by the third acquisition unit to the target voice recognition device.

## Patentansprüche

1. Spracherkennungsverfahren, das in einer Spracherkennungsvorrichtung angewandt wird, wobei die Spracherkennungsvorrichtung mit anderen Spracherkennungsvorrichtungen und einer Spracherkennungssteuervorrichtung über ein Netzwerk verbunden ist, wobei die Spracherkennungsvorrichtung in einem Gerät angeordnet ist, das gesteuert werden soll, und wobei das Verfahren umfasst:
ein Veröffentlichen einer Liste von unterstützten Sprachbefehlen und/oder einer Liste von Anweisungen, die den unterstützten Sprachbefehlen entsprechen, durch die Spracherkennungsvorrichtung in dem Netzwerk;
(503) ein Empfangen eines erfassten Sprachbefehls durch die Spracherkennungsvorrichtung; und
(507a) wenn der erfasste Sprachbefehl unterstützt wird, ein Ausführen eines Befehls, der dem erfassten Sprachbefehl entspricht, durch die Spracherkennungsvorrichtung; oder
(506b) wenn der erfasste Sprachbefehl nicht unterstützt wird, ein Weiterleiten des erfassten Sprachbefehls oder des Befehls, der dem erfassten Sprachbefehl entspricht, durch die Spracherkennungsvorrichtung an eine andere Spracherkennungsvorrichtung über das Netzwerk.

2. Spracherkennungsverfahren nach Anspruch 1, wobei Stimmen in der Liste der unterstützten Sprachbefehle mindestens eine der Stimmen in den folgenden Formen aufweisen:
einen Sprachtext; und kodierte Sprachdaten;
und wobei die Liste der unterstützten Sprachbefehle und/oder die Liste der Anweisungen, die den unterstützten Sprachbefehlen entsprechen, die von der Spracherkennungsvorrichtung veröffentlicht wird/werden, ferner eine Kennung der Spracherkennungsvorrichtung umfasst/umfassen; und die Kennung mindestens eine der Kennungen in den folgenden Formen aufweist:
einem Sprachtext, der der Kennung der Spracherkennungsvorrichtung entspricht; und
codierte Sprachdaten, die der Kennung der Spracherkennungsvorrichtung entsprechen.

3. Spracherkennungsverfahren, das in einer Spracherkennungssteuervorrichtung angewandt wird, wobei die Spracherkennungssteuervorrichtung mit mindestens einer Spracherkennungsvorrichtung über ein Netzwerk verbunden ist, wobei die Spracherkennungsvorrichtung in einem Gerät angeordnet ist, das gesteuert werden soll, und wobei das Verfahren umfasst:
ein Erfassen einer Liste von Sprachbefehlen, die von einer Spracherkennungsvorrichtung unterstützt werden, und/oder einer Liste von Anweisungen, die den von der Spracherkennungsvorrichtung unterstützten Sprachbefehlen entsprechen, durch eine Spracherkennungssteuervorrichtung über das Netzwerk, wobei sowohl die Liste der von der Spracherkennungsvorrichtung unterstützten Sprachbefehle als auch die Liste der Anweisungen, die den Sprachbefehlen entsprechen, die von der Spracherkennungsvorrichtung unterstützt werden, eine Kennung der Spracherkennungsvorrichtung aufweist;
(504) ein Erfassen einer Stimme durch die Spracherkennungssteuervorrichtung;
ein Erkennen des erfassten Sprachbefehls durch die Spracherkennungssteuervorrichtung und ein Abgleichen eines Erkennungsergebnisses und von Kennungen von Spracherkennungsvorrichtungen durch die Spracherkennungssteuervorrichtung;
(505) ein Bestimmen der übereinstimmenden Spracherkennungsvorrichtung durch die Spracherkennungssteuervorrichtung, als eine Ziel-Spracherkennungsvorrichtung, die gesteuert werden soll und die durch den erfassten Sprachbefehl angewiesen wird; und
(506a) ein Senden des erfassten Sprachbefehls oder einer dem erfassten Sprachbefehl entsprechenden Anweisung an die Ziel-Spracherkennungsvorrichtung durch die Spracherkennungsvorrichtung.

4. Spracherkennungsverfahren nach Anspruch 3, wobei das Erfassen der Liste der von der Spracherkennungsvorrichtung unterstützten Sprachbefehle und/oder der Liste der Anweisungen, die den unterstützten Sprachbefehlen entsprechen, durch die Spracherkennungssteuervorrichtung umfasst:
ein Empfangen der Liste der unterstützten Sprachbefehle und/oder der Liste der Anweisungen, die den unterstützten Sprachbefehlen entsprechen, die von der Spracherkennungsvorrichtung veröffentlicht wird/werden, durch die Spracherkennungssteuervorrichtung; oder
ein Senden einer Anforderungsnachricht für die Spracherkennungsfähigkeit an die Spracherkennungsvorrichtung durch die Spracherkennungssteuervorrichtung, um die Liste der unterstützten Sprachbefehle und/oder die Liste der Anweisungen, die den unterstützten Sprachbefehlen entsprechen, zu empfangen, die von der Spracherkennungsvorrichtung beantwortet wird/werden.

5. Spracherkennungsvorrichtung, die mit anderen Spracherkennungsvorrichtungen und einer Spracherkennungssteuervorrichtung über ein Netzwerk verbunden ist, wobei die Spracherkennungsvorrichtung in einem Gerät, das gesteuert werden soll, angeordnet ist, wobei die Spracherkennungsvorrichtung aufweist:
eine erste Kommunikationseinheit (31), die ausgestaltet ist, um eine Liste von unterstützten Sprachbefehlen und/oder eine Liste von Anweisungen, die den unterstützten Sprachbefehlen entsprechen, in dem Netzwerk zu veröffentlichen;
eine erste Empfangseinheit (32), die ausgestaltet ist, um einen erfassten Sprachbefehl zu empfangen; und
eine erste Ausführungseinheit (33), die ausgestaltet ist, um eine Anweisung auszuführen, die dem erfassten Sprachbefehl entspricht; oder,
wenn der erfasste Sprachbefehl nicht unterstützt wird, den erfassten Sprachbefehl oder den Befehl, der dem erfassten Sprachbefehl entspricht, über das Netzwerk an eine andere Spracherkennungsvorrichtung weiterzuleiten.

6. Spracherkennungsvorrichtung nach Anspruch 5, wobei
die erste Kommunikationseinheit (31) ferner ausgestaltet ist, um
die Liste der unterstützten Sprachbefehle und/oder die Liste der Anweisungen, die den unterstützten Sprachbefehlen entsprechen, aktiv in einem Netzwerk zu veröffentlichen; oder
bei Empfang einer Anforderungsnachricht zur Abfrage einer Spracherkennungsfähigkeit mit der Liste der unterstützten Sprachbefehle und/oder der Liste der Anweisungen, die den unterstützten Sprachbefehlen entsprechen, zu antworten.

7. Spracherkennungsvorrichtung nach Anspruch 5, welche ferner aufweist:
eine zweite Empfangseinheit (34), die ausgestaltet ist, um den Befehl, der der erfassten Stimme entspricht, zu empfangen; und
eine zweite Ausführungseinheit (35), die ausgestaltet ist, um den Befehl, der von der zweiten Empfangseinheit empfangen worden ist, auszuführen.

8. Spracherkennungssteuervorrichtung, die mit mindestens einer Spracherkennungsvorrichtung über ein Netzwerk verbunden ist, wobei die Spracherkennungsvorrichtung in einem Gerät, das gesteuert werden soll, angeordnet ist, wobei die Vorrichtung aufweist:
eine zweite Kommunikationseinheit, die ausgestaltet ist, um eine Liste von Sprachbefehlen, die von einer Spracherkennungsvorrichtung unterstützt werden, und/oder eine Liste von Anweisungen, die den von der Spracherkennungsvorrichtung unterstützten Sprachbefehlen entsprechen, über das Netzwerk zu erfassen, wobei sowohl die Liste der von der Spracherkennungsvorrichtung unterstützten Sprachbefehle als auch die Liste der Anweisungen, die den von der Spracherkennungsvorrichtung unterstützten Sprachbefehlen entsprechen, eine Kennung der Spracherkennungsvorrichtung aufweist;
eine dritte Erfassungseinheit, die ausgestaltet ist, um eine Stimme zu erfassen;
eine zweite Erkennungseinheit, die ausgestaltet ist, um den erfassten Sprachbefehl zu erkennen, um ein Erkennungsergebnis und Kennungen von Spracherkennungsvorrichtungen abzugleichen, um die abgeglichene Spracherkennungsvorrichtung als die zu steuernde Ziel-Spracherkennungsvorrichtung zu bestimmen, die durch den erfassten Sprachbefehl angewiesen wird; und um die zweite Kommunikationseinheit zu veranlassen, die von der dritten Erfassungseinheit erfasste Stimme oder einen Befehl, der der von der dritten Erfassungseinheit erfassten Stimme entspricht, an die Ziel-Spracherkennungsvorrichtung zu senden.

## Revendications

1. Procédé de reconnaissance vocale appliqué dans un dispositif de reconnaissance vocale, le dispositif de reconnaissance vocale étant relié à d'autres dispositifs de reconnaissance vocale et à un dispositif de commande de reconnaissance vocale par l'intermédiaire d'un réseau, dans lequel le dispositif de reconnaissance vocale est agencé dans un équipement à commander, le procédé comprenant :
la publication, par le dispositif de reconnaissance vocale, d'une liste de commandes vocales prises en charge et/ou d'une liste d'instructions correspondant aux commandes vocales prises en charge, au sein du réseau ;
(503) la réception, par le dispositif de reconnaissance vocale, d'une commande vocale acquise ; et
(507a) lorsque la commande vocale acquise est prise en charge, l'exécution, par le dispositif de reconnaissance vocale d'une instruction correspondant à la commande vocale acquise ;
(506b) lorsque la commande vocale acquise n'est pas prise en charge, le transfert, par le dispositif de reconnaissance vocale, de la commande vocale acquise ou de l'instruction correspondant à la commande vocale acquise à un autre dispositif de reconnaissance vocale par l'intermédiaire du réseau.

2. Procédé de reconnaissance vocale selon la revendication 1, dans lequel les voix dans la liste de commandes vocales prises en charge comprennent au moins une des voix sous les formes suivantes :
un texte vocal ; et des données vocales codées ;
et dans lequel la liste des commandes vocales prises en charge et/ou la liste des instructions correspondant aux commandes vocales prises en charge, qui sont publiées par le dispositif de reconnaissance vocale, comprennent en outre un identifiant du dispositif de reconnaissance vocale ; et l'identifiant comprend au moins un des identifiants sous les formes suivantes :
un texte vocal correspondant à l'identifiant du dispositif de reconnaissance vocale ; et des données vocales codées correspondant à l'identifiant du dispositif de reconnaissance vocale.

3. Procédé de reconnaissance vocale appliqué dans un dispositif de commande de reconnaissance vocale, le dispositif de commande de reconnaissance vocale étant relié à au moins un dispositif de reconnaissance vocale par l'intermédiaire d'un réseau, dans lequel le dispositif de reconnaissance vocale est agencé dans un équipement à commander, le procédé comprenant :
l'acquisition, par un dispositif de commande de reconnaissance vocale, d'une liste de commandes vocales prises en charge par un dispositif de reconnaissance vocale et/ou d'une liste d'instructions correspondant aux commandes vocales prises en charge par le dispositif de reconnaissance vocale par l'intermédiaire du réseau, dans lequel chaque élément parmi la liste de commandes vocales prises en charge par le dispositif de reconnaissance vocale et la liste des instructions correspondant aux commandes vocales prises en charge par le dispositif de reconnaissance vocale comprend un identifiant du dispositif de reconnaissance vocale ;
(504) l'acquisition, par le dispositif de commande de reconnaissance vocale, d'une voix ;
la reconnaissance, par le dispositif de commande de reconnaissance vocale, de la commande vocale acquise, et l'appariement, par le dispositif de commande de reconnaissance vocale, d'un résultat de reconnaissance avec les identifiants des dispositifs de reconnaissance vocale ;
(505) la détermination, par le dispositif de commande de reconnaissance vocale, du dispositif de reconnaissance vocale apparié comme un dispositif de reconnaissance vocale cible à commander qui suit les instructions de la commande vocale acquise ; et
(506a) l'envoi, par le dispositif de commande de reconnaissance vocale, de la commande vocale acquise ou de l'instruction correspondant à la commande vocale acquise au dispositif de reconnaissance vocale cible.

4. Procédé de reconnaissance vocale selon la revendication 3, dans lequel, l'acquisition, par le dispositif de commande de reconnaissance vocale, de la liste des commandes vocales prises en charge par le dispositif de reconnaissance vocale et/ou de la liste des instructions correspondant aux commandes vocales prises en charge, comprend :
la réception, par le dispositif de commande de reconnaissance vocale, de la liste des commandes vocales prises en charge et/ou de la liste des instructions correspondant aux commandes vocales prises en charge qui sont publiées par le dispositif de reconnaissance vocale ; ou,
l'envoi, par le dispositif de commande de reconnaissance vocale, d'un message de requête de capacité de reconnaissance vocale au dispositif de reconnaissance vocale afin de recevoir la liste des commandes vocales prises en charge et/ou la liste des instructions correspondant aux commandes vocales prises en charge auxquelles le dispositif de reconnaissance vocale répond.

5. Dispositif de reconnaissance vocale qui est relié à d'autres dispositifs de reconnaissance vocale et à un dispositif de commande de reconnaissance vocale par l'intermédiaire d'un réseau, dans lequel le dispositif de reconnaissance vocale est agencé dans un équipement à commander, le dispositif de reconnaissance vocale comprenant :
une première unité de communication (31) configurée pour publier une liste de commandes vocales prises en charge et/ou une liste d'instructions correspondant aux commandes vocales prises en charge, au sein du réseau ;
une première unité de réception (32) configurée pour recevoir une commande vocale acquise ; et
une première unité d'exécution (33) configurée pour : exécuter une instruction correspondant à la commande vocale acquise ; ou,
lorsque la commande vocale acquise n'est pas prise en charge, transférer la commande vocale acquise ou l'instruction correspondant à la commande vocale acquise à un autre dispositif de reconnaissance vocale par l'intermédiaire du réseau.

6. Dispositif de reconnaissance vocale selon la revendication 5, dans lequel
la première unité de communication (31) est en outre configurée pour : publier activement la liste des commandes vocales prises en charge et/ou la liste des instructions correspondant aux commandes vocales prises en charge, au sein d'un réseau ; ou
lors de la réception d'un message de requête pour demander une capacité de reconnaissance vocale, répondre avec la liste des commandes vocales prises en charge et/ou la liste des instructions correspondant aux commandes vocales prises en charge.

7. Dispositif de reconnaissance vocale selon la revendication 5, comprenant en outre :
une deuxième unité de réception (34) configurée pour recevoir l'instruction correspondant à la voix acquise ; et
une deuxième unité d'exécution (35) configurée pour exécuter l'instruction reçue par la deuxième unité de réception.

8. Dispositif de commande de reconnaissance vocale qui est relié à au moins un dispositif de reconnaissance vocale par l'intermédiaire d'un réseau, dans lequel le dispositif de reconnaissance vocale est agencé dans un équipement à commander, le dispositif comprenant :
une deuxième unité de communication configurée pour acquérir une liste de commandes vocales prises en charge par un dispositif de reconnaissance vocale et/ou d'une liste d'instructions correspondant aux commandes vocales prises en charge par le dispositif de reconnaissance vocale par l'intermédiaire du réseau, dans lequel chaque élément de la liste de commandes vocales prises en charge par le dispositif de reconnaissance vocale et de la liste d'instructions correspondant aux commandes vocales prises en charge par le dispositif de reconnaissance vocale comprend un identifiant du dispositif de reconnaissance vocale ;
une troisième unité d'acquisition configurée pour acquérir une voix ;
une deuxième unité de reconnaissance configurée pour reconnaître la commande vocale acquise, apparier un résultat de reconnaissance avec les identifiants des dispositifs de reconnaissance vocale, déterminer le dispositif de reconnaissance vocale apparié comme le dispositif de reconnaissance vocale cible à commander qui suit les instructions de la commande vocale acquise ; et déclencher la deuxième unité de communication afin d'envoyer la voix acquise par la troisième unité d'acquisition ou une instruction correspondant à la voix acquise par la troisième unité d'acquisition au dispositif de reconnaissance vocale cible.
